# EUROPEAN PATENT SPECIFICATION

(11) **EP 1 960 253 B1**
(45) Date of publication and mention of the grant of the patent: **26.06.2013**
(21) Application number: 06824551.3
(22) Date of filing: 16.11.2006
(51) Int. Cl.: B62D 25/24, B60J 7/08

(54) **HATCH FRAME FOR VEHICLE**
DACHLUKENRAHMEN FÜR FAHRZEUG
CHASSIS DE HAYON POUR VEHICULE

(30) Priority: 29.11.2005 SE 0502600
(43) Date of publication of application: 27.08.2008
(73) Proprietor: Scania CV AB (PUBL), 151 87 Södertälje (SE)
(72) Inventor: HERMANSSON, Peter, S-144 64 Rönninge (SE); SÖDERLUND, Jan, S-144 64 Rönninge (SE)
(74) Representative: Thum, Bernhard
(86) International application number: PCT/SE2006/050482
(87) International publication number: WO 2007/064289

(56) References cited:
- EP-A- 0 111 457
- EP-A- 1 120 303
- DE-A1- 19 635 873
- DE-A1- 19 913 532
- DE-U1- 20 113 788
- FR-A- 2 764 551
- GB-A- 2 078 628
- US-B1- 6 540 288

## Description

### Technical field

The present invention relates to a hatch frame for a vehicle.

### Background

For sundry storage and for access to items situated behind a cab wall of a vehicle, hatches are often provided in a vehicle cab wall. Fitting a hatch of this kind involves not only a hatch but also various fillet panels around the hatch, reinforcements of the cab structure or cab panel round the hole for the hatch, hinges for the hatch cover, hatch lock, sealing strips to prevent dirt ingress round the hatch cover, and possibly also gas springs for holding the hatch cover open. All these items contribute to a high assembly cost and a relatively long assembly time.

An example of a hatch, in the form of a window, intended for a cab of a vehicle is referred to in US 5 503 452 A, which refers to a hatch cover which can be swung outwards. The hatch frame is made of substantially rigid or semi-rigid plastic material fastened by adhesive bonding to the recessed stiffening aperture in the vehicle's sheetmetal bodywork where the hatch frame is to be fitted.

Another hatch frame, but according the preamble of claim 1, is known from FR 2764 551 A1.

A problem with hatch frames of the abovementioned kind is that the positioning, shape and size of the hatch frame have to be adapted to the aperture in the vehicle's bodywork.

### Brief description of the invention

The problem of the positioning, shape and size of the hatch frame having to be adapted to the aperture in the vehicle's bodywork is solved according to the invention by a hatch frame according to the preamble of claim 1 provided with the characteristics indicated in the characterising part of claim 1.

The fact that the shell comprises the characteristics of claim 1 affords the advantage of providing a hatch frame which is easy and inexpensive to manufacture while at the same time being provided with a stiffening structure which eliminates the need for reinforcements round the hole in the vehicle bodywork where the frame is to be fitted, which need would have entailed the size, shape or positioning of the hatch frame being determined before the shaping of the bodywork, without any possibility of determining the size, shape and positioning of the hatch frame after the shaping of the bodywork.

The fact that the hatch frame comprises the characteristics of the dependent claims affords the advantage of providing a hatch frame whereby it is possible to incorporate in a hatch frame module a plurality of functions such as, for example, fastenings for hinges, lock fastenings and sealing strips, thereby facilitating assembly and at the same time making it possible to shorten assembly time.

### Brief description of the drawings

The invention is explained below in more detail with reference to the attached drawing, in which:

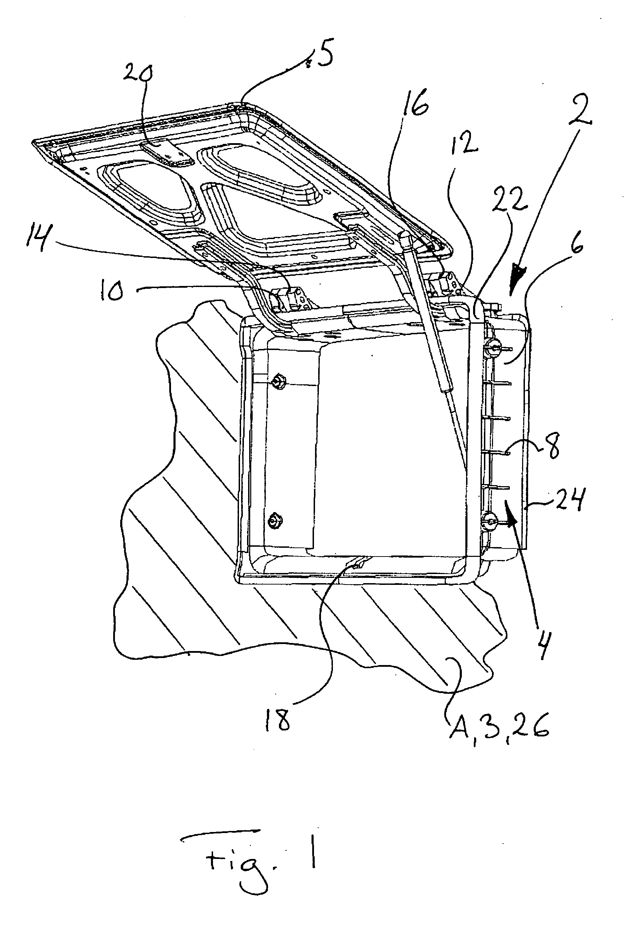

Figure 1 depicts schematically a view of a hatch frame with attached hatch cover according to an embodiment of the invention.

### Description of preferred embodiments

In the preferred embodiment of the invention, the hatch frame is fitted to a vehicle cab, more specifically a driver's cab 1 of a vehicle 3.

Figure 1 depicts schematically a view of a hatch frame 2 according to a preferred embodiment of the invention, and a hatch cover 5 arranged relative to the hatch frame 2. The hatch frame 2 comprises reinforcements 4, in this embodiment in the form of a stiffening wall 6 which extends round the whole hatch frame 2 with folded-in reinforcing ribs 8 arranged substantially perpendicular to the plane A of the hatch frame 2, which reinforcements 4 render the hatch frame 2 sufficiently rigid to eliminate the need for reinforcements at the portion of the bodywork panel 26 of the vehicle 3 where the hatch frame 2 is to be fitted, which need would have entailed the size, shape or positioning of the hatch frame 2 being determined before the shaping of the bodywork panel 26 of the vehicle 3. Also according to this embodiment, preferably at least one fastening 10,12 for a hinge 14,16, and/or at least one fastening 18 for a hatch lock 20, and/or at least one sealing strip 22,24 which seals against the bodywork panel 26 of the vehicle 3, are incorporated in the hatch frame. The hatch frame 2 is preferably made of a plastic material which, with the associated reinforcements 4, will be sufficiently rigid to eliminate the need for reinforcements of the bodywork panel 26 of the vehicle 3. The hatch frame 2 is preferably injection-moulded in reinforced, e.g. fibre-reinforced, thermoplastic and embossed and coloured. The vehicle's bodywork panel 26 may be made of plastic material, but also of some other material, e.g. sheetmetal.

The hatch frame 2 is preferably fastened to the vehicle 3 by screws, preferably in the structure of the vehicle cab 1 or directly in the bodywork panel 26, but it may also be fastened in some other way, e.g. by adhesive bonding.

The hatch frame according to the invention may be used in all kinds of vehicles, e.g. passenger cars, buses or trucks.

## Claims

1. A hatch frame (2) to be fitted into a bodywork panel (26) of a vehicle (3), **characterised in that** the hatch frame (2) comprises reinforcements (4) in form of a stiffening wall (6) extending around the hatch frame (2), **characterized in that** the stiffening wall (6) includes reinforcing ribs (8) arranged substantially perpendicular to the hatch frame's plane (A) in the stiffening wall (6).

2. A hatch frame (2) according to claim 1, **characterized in that** at least one fastening (10,12) for a hinge (14,16), and/or at least one fastening (18) for a hatch lock (20), and/or at least one sealing strip (22,24) which seals against the bodywork panel (26) of the vehicle (3), are incorporated in the hatch frame (2).

3. A hatch frame (2) according to claim 1 or 2, **characterised in that** the hatch frame (2) is made of plastic material.

4. A hatch frame (2) according to any one of the above claims, **characterised in that** the hatch frame (2) is injection-moulded in reinforced, e.g. fibre-reinforced, thermoplastic.

5. A module (2) according to any one of the above claims, **characterised in that** the module further comprises a hatch cover (5).

## Patentansprüche

1. Dachlukenrahmen (2) zum Einpassen in ein Karosseriepanel (26) eines Fahrzeugs (3), **dadurch gekennzeichnet, dass** der Dachlukenrahmen (2) Versteifungen (4) in Form einer sich um den Dachlukenrahmen (2) erstreckenden Aussteifungswand (6) aufweist, **dadurch gekennzeichnet, dass** die Aussteifungswand (6) Versteifungsrippen (8) aufweist, die im Wesentlichen senkrecht zur Ebene (A) des Dachlukenrahmens (2) in der Aussteifungswand (6) angeordnet sind.

2. Dachlukenrahmen (2) nach Anspruch 1, **dadurch gekennzeichnet, dass** der Dachlukenrahmen (2) wenigstens eine Befestigung (10, 12) für ein Scharnier (14, 16) und/oder wenigstens eine Befestigung (18) für ein Dachlukenschloss (20) und/oder wenigstens einen gegen das Karosseriepanel (26) des Fahrzeugs (3) abdichtenden Dichtungsstreifen (22, 24) einschließt.

3. Dachlukenrahmen (2) nach Anspruch 1 oder 2, **dadurch gekennzeichnet, dass** der Dachlukenrahmen (2) aus Kunststoff besteht.

4. Dachlukenrahmen (2) nach einem der vorhergehenden Ansprüche, **dadurch gekennzeichnet, dass** der Dachlukenrahmen (2) durch Spritzgießen in einem verstärkten Thermoplast, beispielsweise einem faserverstärkten Thermoplast, ausgeformt ist.

5. Modul (2) nach einem der vorhergehenden Ansprüche, **dadurch gekennzeichnet, dass** das Modul ferner einen Dachlukendeckel (5) aufweist.

## Revendications

1. Cadre de trappe (2) destiné à être disposé dans un panneau de carrosserie (26) d'un véhicule (3), **caractérisé en ce que** le cadre de trappe (2) comprend des renforts (4) sous la forme d'une paroi de raidissement (6) s'étendant autour du cadre de trappe (2), **caractérisé en ce que** la paroi de raidissement (6) inclut des nervures de renfort (8) agencées sensiblement perpendiculairement au plan (A) de cadre de trappe dans la paroi de raidissement (6).

2. Cadre de trappe (2) selon la revendication 1, **caractérisé en ce qu'**au moins un dispositif de fixation (10, 12) pour une charnière (14, 16), et/ou au moins un dispositif de fixation (18) pour un verrou de trappe (20), et/ou au moins une bande d'étanchéité (22, 24) qui crée une étanchéité contre le panneau de carrosserie (26) du véhicule (3), est/sont incorporé(s) dans le cadre de trappe (2).

3. Cadre de trappe (2) selon la revendication 1 ou 2, **caractérisé en ce que** le cadre de trappe (2) est constitué d'un matériau plastique.

4. Cadre de trappe (2) selon l'une quelconque des revendications ci-dessus, **caractérisé en ce que** le cadre de trappe (2) est moulé par injection dans un thermoplastique renforcé, par exemple renforcé avec des fibres.

5. Module (2) selon l'une quelconque des revendications ci-dessus, **caractérisé en ce que** le module comprend en outre un capot de trappe (5).
